# EUROPEAN PATENT SPECIFICATION

(11) **EP 2 498 326 B1**
(45) Date of publication and mention of the grant of the patent: **13.11.2013**
(21) Application number: 11175870.2
(22) Date of filing: 28.07.2011
(51) Int. Cl.: H01M 4/62, H01M 4/131, H01M 4/136, H01M 4/133

(54) **Electrode for rechargeable lithium battery and rechargeable lithium battery including the same**
Elektrode für eine wiederaufladbare Lithiumbatterie und wiederaufladbare Lithiumbatterie damit
Électrode pour batterie rechargeable au lithium et batterie rechargeable au lithium la comprenant

(30) Priority: 07.03.2011 US 450074 P; 21.07.2011 US 201113188403
(43) Date of publication of application: 12.09.2012
(73) Proprietor: SAMSUNG SDI CO., LTD., Yongin-si, Gyeonggi-do (KR)
(72) Inventor: Kim, Jong-Man, Gyeonggi-do (KR); Baek, Ho-Yul, Gyeonggi-do (KR); Kim, Jae-Rok, Gyeonggi-do (KR); Kim, Jake, Gyeonggi-do (KR); Cheong, Kyeong-Beom, Gyeonggi-do (KR)
(74) Representative: Mounteney, Simon James

(56) References cited:
- WO-A1-98/20573
- WO-A2-01/29915
- R. R. GARSUCH, D.-B. LE, A. GARCH, J. LI, S. WANG, A. FAROOQ, J. R. DAHN: "Studies of Lithium-Exchanged Nafion as an Electrode Binder for Alloy Negatives in Lithium-Ion Batteries", JOURNAL OF THE ELECTROCHEMICAL SOCIETY, vol. 155, no. 10, 1 August 2008 (2008-08-01), pages 721-724, XP002659815,

## Description

### BACKGROUND OF THE INVENTION

### (a) Field of the Invention

An electrode for a rechargeable lithium battery and a rechargeable lithium battery are provided.

### (b) Description of the Related Art

Batteries transform chemical energy generated from electrochemical redox reactions of a chemical material into electrical energy. Such batteries are divided into a primary battery, which should be discarded after consuming all the energy, and a rechargeable battery, which can be recharged many times. The rechargeable battery can be charged/discharged many times based on the reversible transformation between chemical energy and electrical energy.

Recent development in the high-tech electronic industry has allowed electronic devices to become smaller and lighter in weight, which leads to more uses of portable electronic devices. Portable electronic devices increasingly require a battery with high energy density as a power source. Accordingly, research on a lithium rechargeable battery is briskly under progress.

In general, an electrode for a rechargeable lithium battery is fabricated by mixing an electrode active material, a binder, and a conductive agent to prepare slurry, coating the slurry on a substrate, and then, drying and compressing the coated substrate. The binder has conventionally included polyvinylidene fluoride or styrene-butadiene rubber.

### SUMMARY OF THE INVENTION

One aspect of the present invention provides an electrode for a rechargeable lithium battery, which can improve cycle-life characteristic of the battery.

Another aspect of the present invention provides a rechargeable lithium battery including the electrode.

The present invention provides an electrode for a rechargeable lithium battery according to claim 1 which comprises a sulfonated tetrafluoroethylene copolymer and an active material layer. The sulfonated tetrafluoroethylene copolymer is contained within the active material layer and/or coated directly on a surface of the active material layer.

The present invention provides an electrode for a rechargeable lithium battery, which includes an ionomer represented by a random copolymer of Chemical Formula 1. 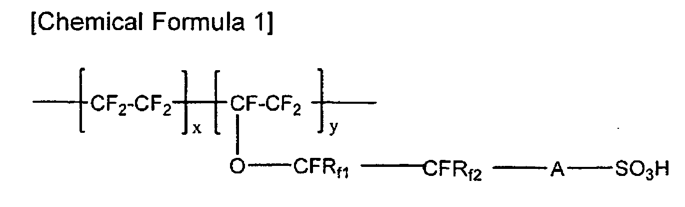 In Chemical Formula 1,
A is selected from a bond, a -CFR_{f7}- group, a -O-CFR_{f8}- group, a -O-(CFR_{f3}-CFR_{f4})- group, a -(CFR_{f5}-CFR_{f6})- group or a combination comprising at least one of the above groups, wherein two or more groups in total are present in the combination,
R_{f1} to R_{f8} are each independently fluorine a C₁-₄ alkyl, preferably CH₃, or a fluorinated C₁-₄ alkyl, preferably CF₃, and
x and y are each independently an integer ranging from 1 to 100, wherein the electrode further comprises an active material layer, and the ionomer is contained within the active material layer and/or coated directly on a surface of the active material layer.

Preferably the ionomer comprises from 500 to 1500, more preferably from 750 to 1250 and more preferably 1000 structural units represented by Chemical Formula 1.

The electrode preferably further includes a current collector. The active material layer may preferably further comprise a conductive material. The active material layer may further comprise a binder.

In a preferred embodiment, the ionomer may be included in an amount of 0.1 to 10 parts by weight based on 100 parts by weight of the active material, preferably 0.5 to 1 parts by weight based on 100 parts by weight of the active material.

The electrode may be a positive electrode or a negative electrode.

When the electrode is a positive electrode, as a positive active material, the active material layer may include LiₐA_{1-b}R_{b}D₂ (wherein, in the above Chemical Formula, 0.90 ≤ a ≤ 1.8 and 0 ≤ b ≤ 0.5); LiₐE_{1-b}R_{b}O_{2-c}D_{c} (wherein, in the above Chemical Formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above Chemical Formula, 0 ≤ b < 1, 0 ≤ c ≤ 0.05); LiₐNi_{1-b-c}Co_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c} Co_{b}R_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < a < 2); LiₐNi_{1-b-c}Mn_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein, in the above Chemical Formula, 0.90 ≤ a < 1.8, 0 ≤ b ≤ 0.5, 0 ≤ c ≤ 0.05 and 0 < a < 2); LiaNi_{1-b-c}Mn_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); ; LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); ; LiₐNi_{b}Co_{c}Mn_{d}GeO₂ (wherein, in the above Chemical Formula, 0.90 ≤ a ≤ 1.8, 0 ≤ b ≤ 0.9, 0 ≤ c ≤ 0.5, 0 ≤ d ≤ 0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤ 0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂, LiNiVO₄; Li_{(3-f)}J₂(PO₄)₃ (0 ≤ f ≤ 2); Li_{(3-f)}Fe₂(PO₄)₃ (0 ≤ f ≤ 2); LiFePO₄ or a combination thereof,

A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

When the electrode is a positive electrode, as a positive active material, a lithium manganese-based oxide may be included in the active material layer.

When the electrode is a negative electrode, as a negative active material, crystalline carbon, amorphous carbon, a lithium metal alloy of lithium with a metal selected from Na, K, Rb, Cs, Fr, Be, Mg, Ca, Sr, Si, Sb, Pb, In, Zn, Ba, Ra, Ge, Al, or Sn, Si, SiOₓ (0 < x < 2), a Si-Q alloy (wherein Q is an element selected from the group consisting of an alkali metal, an alkali-earth metal, a group 13 element, a group 14 element, a transition element, a rare earth element, and combinations thereof, and is not Si), Sn, SnO₂, a Sn-R alloy (wherein R is an element selected from the group consisting of an alkali metal, an alkali-earth metal, a group 13 element, a group 14 element, a transition element, a rare earth element, and a combination thereof but is not Sn), or a combination thereof may be included in the active material layer.

According to another aspect of the present invention, provided is a rechargeable lithium battery including the aforementioned electrode; and a non-aqueous electrolyte.

The rechargeable lithium battery may have improved cycle-life characteristic.

### BRIEF DESCRIPTION OF THE DRAWINGS

FIG. 1 is a drawing schematically showing a rechargeable lithium battery according to one embodiment of the present invention.
FIG. 2 is a schematic view showing a part of the cross-section of a rechargeable lithium battery including an electrode according to another embodiment of the present invention.
FIG. 3 is a schematic view showing a part of the cross-section of a rechargeable lithium battery including an electrode according to still another embodiment of the present invention.
FIG. 4 is a graph showing the high temperature cycle-life characteristic of a rechargeable lithium battery according to the embodiment of the present invention.

### DETAILED DESCRIPTION

According to one embodiment of the present invention, provided is an electrode for a rechargeable lithium battery, which includes ionomer represented by a random copolymer of Chemical Formula 1. 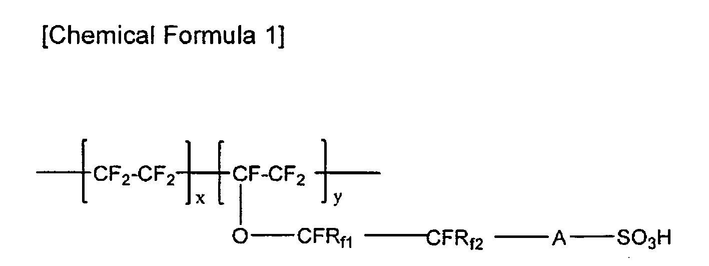
A is selected from a bond, a CFR_{f7}- group, a -O-CFR_{f8}- group, a -O-(CFR_{f3}-CFR_{f4})- group, - a (CFR_{f5}-CFR_{f6})- group or a combination comprising at least one of the above groups, wherein two or more groups in total are present in the combination,
R_{f1} to R_{f8} are each independently fluorine, a C₁₋₄ alkyl, preferably CH₃, or a fluorinated C₁₋₄ alkyl, preferably CF₃ and
x and y are each independently an integer ranging from 1 to 100.

The structural units represented by Chemical Formula 1 represent the individual units of the ionomers that may be used in the present invention. The units bind to other units to form the ionomer. Preferably the ionomer comprises from 500 to 1500, more preferably from 750 to 1250 and more, preferably 1000 structural units represented by Chemical Formula 1. In preferred embodiments of the present invention the repeating structural units may be different or the same. For example, the ionomer may comprise between 500 and 1500 identical structural units as represent by Chemical Formula 1. For example, in an embodiment of the present invention the ionomer used may have a molecular weight of between 10⁵ and 10⁶ Da.

In a preferred embodiment of the present invention, A is selected from a -O-(CFR_{f3}-CFR_{f4})- group, a (CFR_{f5}-CFR_{f6})- group or a combination comprising at least one of the above groups, wherein two or more groups in total are present in the combination, R_{f1} to R_{f6} are each independently fluorine, a C₁₋₄ alkyl, preferably CH₃, or a fluorinated C₁₋₄ alkyl, preferably CF₃.

In a preferred embodiment of the present invention, A comprises a -O-(CFR_{f3}-CFR_{f4})- group, preferably A comprises between 1 and 10 -O-(CFR_{f3}-CFR_{f4})- groups.

In a further preferred embodiment of the present invention, A comprises at least one -O-(CF₂-CF₂)- group and at least one -O-(CF₂-CFCF₃)- group.

In a further preferred embodiment of the present invention, independently x is an integer ranging from 1 to 50, preferably 3 to 20, and y is an integer ranging from 1 to 50, preferably 1 to 10. For example, the ionomer represented by a random copolymer of Chemical Formula 1 can be a polymer represented by Chemical Formula 2.

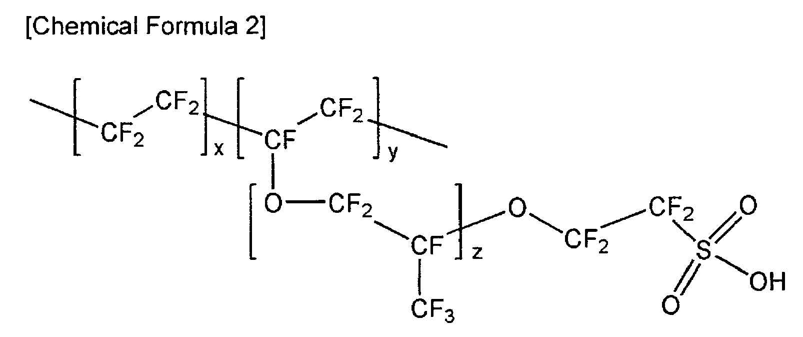

In Chemical Formula 2,
x is an integer ranging from 3 to 20,
y is an integer ranging from 1 to 10,
z is an integer ranging from 1 to 10.

For example, in Chemical Formula 2, x is an integer ranging from 6 to 15, y is an integer ranging from 1 to 5 and z is an integer ranging from 1 to 5, preferably x is an integer ranging from 10 to 15 or from 6 to 10, y is 1 to 5 and z is 1.

Preferably the ionomer comprises from 500 to 1500, more preferably from 750 to 1250 and more, preferably 1000 structural units represented by Chemical Formula 2.

In a preferred embodiment of the present invention, in Chemical Formula 2 x = 6 to 15, y = 1 and z = 1 and the ionomer comprises from 750 to 1250, for example 1000, structural units represented by Chemical Formula 2. Preferably, each structural unit is identical.

Sulfonated tetrafluoroethylene copolymers within the scope of Chemical Formula 1 and Formula 2 are commercially available. Commercial products such as Nafion® N1110 (DuPont & co.), Nafion® N117 (Dupont & co.), Nafion® N115 (Dupont & co.), Nafion® NR-212 (Dupont & co.), Nafion® NR-211 (Dupont & co.), Nafion® XL-100 (Dupont & co.), Nafion® NR50 1100 EW (Dupont & co.), and etc. can be used as in the present invention.

The electrode for a rechargeable lithium battery preferably includes a current collector and the active material layer formed on the current collector.

For example, the ionomer represented by a random copolymer of the above Chemical Formula 1 may be included in the active material layer mixed with an active material.

In a further example, the ionomer represented by a random copolymer of the above Chemical Formula 1 may form a separate coating layer on an active material layer in the electrode. In a preferred embodiment of the present invention, the active material layer may still include the ionomer represented by a random copolymer of the above Chemical Formula 1 because the ionomer may permeate into the active material layer. When the ionomer permeates into the active material layer, more ionomers may exist in the active material layer toward the interface on the coating layer of ionomer. That is, a concentration gradient of ionomer can be formed in the active material layer. In a preferred embodiment of the present invention, the ionomer is contained within the active material layer and coated directly on a surface of the active material layer, preferably wherein the ionomer within the active material layer is present at a greater concentration toward the interface of the coating layer of ionomer and the active material layer.

The electrode may be a positive electrode or a negative electrode. When the electrode is a positive electrode, the active material layer may be a positive active material layer including the ionomer represented by a random copolymer of the above Chemical Formula 1 with a positive active material. When the electrode is a negative electrode, the active material layer may be a negative active material layer including the ionomer represented by a random copolymer of the above Chemical Formula 1 with a negative active material.

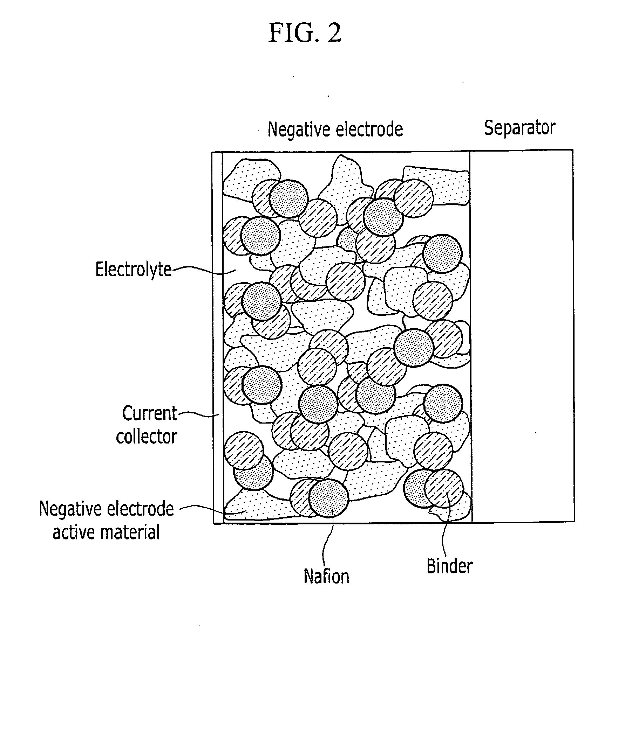

For example, the active material layer may be formed by coating a composition including ionomer represented by a random copolymer of the above Chemical Formula 1, an active material, a conductive material, a binder, and a solvent on to a current collector. The ionomer represented by a random copolymer of the above Chemical Formula 1 may be uniformly dispersed in the active material layer. FIG. 2 is a schematic view showing a part of the cross-section of a rechargeable lithium battery including the electrode prepared in this method.

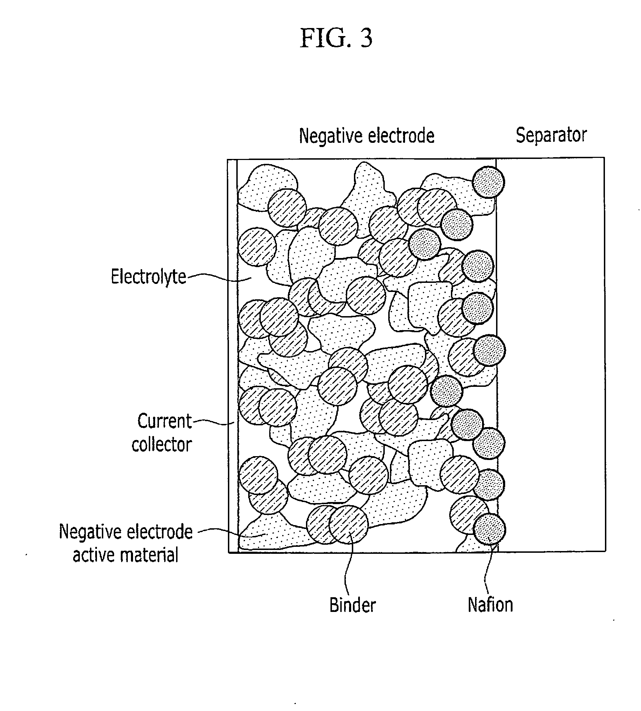

According to another embodiment of the present invention, an active material layer is formed on a current collector by coating a composition including an active material, a conductive material, a binder, a solvent, and any other materials that may be included in an active material layer, and then, applying a solution including ionomer represented by a random copolymer of the above Chemical Formula 1 on to the active material layer, so that the ionomer is coated on to the active material layer. In a preferred embodiment, the solution including ionomer may permeate into the active material layer. Accordingly, the ionomer represented by a random copolymer of the above Chemical Formula 1 may be included in the active material layer, as well as being coated thereon. The thickness of the coating layer formed by applying the solution including ionomer may be from about 0.05% to about 10% of the active material layer, preferably from about 0.1 % to about 10% of that of the active material layer, more preferably about 0.2% to about 5% of that of the active material. When the thickness of the coating layer formed by applying the solution including ionomer is less than about 0.05%, preferably less than 0.1% of that of the active material layer, trapping the metal ions such as transition metal ions and water, is not as effective. When the thickness of the coating layer formed by applying the solution including ionomer is more than about 10% of that of the active material layer, it may affect the movement of lithium ions negatively and, the capacity of the cell reduces relatively as the total thickness of the electrode becomes thicker. Because the ionomer represented by a random copolymer of the above Chemical Formula 1 in the coating layer may permeate into the active material layer, the concentration gradient may be formed where the concentration of the ionomer is higher toward the interface on a separator. FIG. 3 provides a schematic view showing the partial cross-section of a rechargeable lithium battery including the electrode prepared in this method.

The electrodes of the present may preferably be prepared by a method comprising mixing an active material and an ionomer of Chemical Formula 1 in a solvent (preferably water) to prepare an active material slurry.

The method preferably further comprises mixing a binder and/or a conductive material with the active material and ionomer.

The method preferably further comprises coating the active slurry on to a current collector and then drying and compressing to form an electrode.

The electrodes of the present invention may also be prepared by a method comprising the step of coating an active material layer with a solution of an ionomer of Chemical Formula 1 in a solvent (preferably water, propanol or a mixture thereof).

The electrodes of the present invention may be prepared by a combination of the above-methods. In a preferred embodiment of the present invention a method is provided comprising:
mixing an ionomer of Chemical Formula 1 with an active material and an in a solvent (preferably water) to prepare an active material slurry,
coating the active slurry on to a current collector and then drying and compressing to form an active material layer, and
coating the active material layer with a solution of an ionomer of Chemical Formula 1 in a solvent (preferably water, propanol or a mixture thereof).

The ionomer represented by a random copolymer of the above Chemical Formula 1 is a fluorine-based copolymer including a sulfonic acid group and is able to trap moisture and a metal and thus, mitigates growth of a SEI (Solid Electrolyte Interface) layer on the surface of a negative electrode. As a result, a rechargeable lithium battery comprising the present invention may have improved cycle-life.

When a rechargeable lithium battery is evaluated regarding cycle-life after being allowed to stand, a thick SEI layer may form as the negative electrode includes more metals, this may cause capacity decrease. The metals gathering at the negative electrode are eluted from a positive active material and move to the negative electrode. Moisture in an electrolyte may be one of the factors which cause the metals to be eluted from the positive active material. The metals or a metal oxide thereof formed at the negative electrode may accelerate growth of the SEI layer on the negative electrode and, thus, decrease cycle-life of the rechargeable lithium battery.

It is believed, without wishing to be bound by theory, a sulfonic acid group in the ionomer represented by a random copolymer of the above Chemical Formula 1 reacts with metal ions eluted from the positive active material and forms a salt therewith by an ion exchange reaction. In such a manner, the metal ions are trapped and do not move toward the surface of a negative active material. For example, in case of a monovalent metal, a reaction scheme 1 may take place, and in case of a divalent metal ion, a reaction scheme 2 may be possible (Source: Desalination, 249, page 677, 2009).

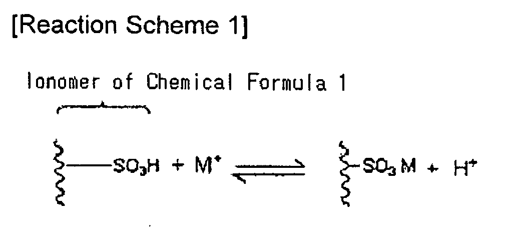

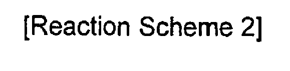

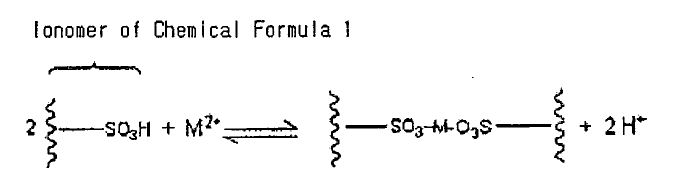

In the reaction schemes 1 and 2, 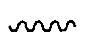 indicates the backbone of ionomer represented by the above Chemical Formula 1, M⁺ indicates a monovalent metal ion, and M²⁺ indicates a divalent metal ion. The reaction schemes 1 and 2 show a mechanism that either one of the sulfone groups included in the ionomer of the above Chemical Formula 1 may react with M⁺ or M²⁺_{.}

In addition, the sulfonic acid group of the ionomer represented by a random copolymer of the above Chemical Formula 1 absorbs moisture in an electrolyte. The sulfonic acid of ionomer has a hydrogen bond with H₂O, H₃O⁺, and the like and thus, may absorb much moisture.

The ionomer represented by a random copolymer of the above Chemical Formula 1 may be included in an amount ranging from 0.1 to 10 parts by weight based on 100 parts by weight of an active material preferably 0.5 to 1 parts by weight based on 100 parts by weight of the active material. When the ionomer is included within the range, it may not disturb the function of an active material but still afford the aforementioned technical effects.

The electrode may be a positive electrode or a negative electrode.

According to another embodiment of the present invention, provided is a rechargeable lithium battery including an electrode including ionomer represented by a random copolymer of Chemical Formula 1 and a non-aqueous electrolyte.

The electrode may be a positive electrode or a negative electrode.

In general, a rechargeable lithium battery may be classified as a lithium ion battery, a lithium ion polymer battery, and a lithium polymer battery according to the presence of a separator and the kind of an electrolyte used therein. The rechargeable lithium battery may have a variety of shapes and sizes and thus, may include a cylindrical, prismatic, coin, or pouch-type battery and a thin film type or a bulky type in size. The structure and fabricating method for a lithium ion battery pertaining to the present invention are well known in the art.

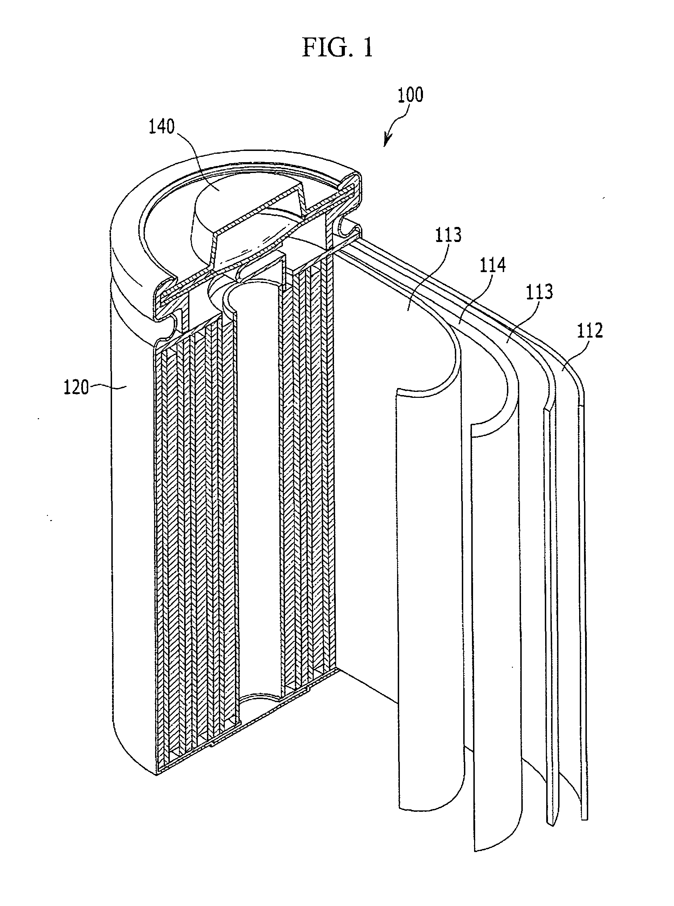

FIG. 1 is an exploded perspective view showing the schematic structure of a rechargeable lithium battery. Referring to FIG. 1, the rechargeable lithium battery 100 includes a negative electrode 112, a positive electrode 114, a separator 113 interposed between the negative electrode 112 and the positive electrode 114, an electrolyte (not shown) impregnating the separator 113, a battery case 120, and a sealing member 140 sealing the battery case 120. The rechargeable lithium battery 100 is fabricated by sequentially laminating a negative electrode 112, a positive electrode 114, and a separator 113, spirally winding them, and housing the spiral-wound product in a battery case 120.

The negative electrode includes a current collector and a negative active material layer formed on the current collector. The negative active material layer may include a negative active material. The negative active material layer may also include ionomer represented by a random copolymer of Chemical Formula 1, which is illustrated in detail as aforementioned.

The negative active material includes a material that reversibly intercalates/deintercalates lithium ions, a lithium metal, a lithium metal alloy, a material being capable of doping and dedoping lithium, or a transition metal oxide.

The material that can reversibly intercalate/deintercalate lithium ions includes a carbon material. The carbon material may be any carbon-based negative active material generally used in a lithium ion rechargeable battery. Examples of the carbon material include crystalline carbon, amorphous carbon, and mixtures thereof. The crystalline carbon may be non-shaped, or sheet, flake, spherical, or fiber-shaped natural graphite or artificial graphite. The amorphous carbon may be a soft carbon, a hard carbon, a mesophase pitch carbonized product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, or Sn.

Examples of the material being capable of doping lithium include Si, SiOₓ (0 < x < 2), a Si-Q alloy (wherein Q is an element selected from the group consisting of an alkali metal, an alkali-earth metal, a group 13 element, a group 14 element, a transition element, a rare earth element, and combinations thereof, and is not Si), Sn, SnO₂, a Sn-R alloy (wherein R is an element selected from the group consisting of an alkali metal, an alkali-earth metal, a group 13 element, a group 14 element, a transition element, a rare earth element, and combinations thereof but is not Sn), or mixtures thereof. At least one of these materials may be mixed with SiO₂. The elements Q and R may preferably be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide include vanadium oxide, lithium vanadium oxide, and the like.

The negative active material layer includes a binder and optionally, a conductive material.

The binder improves binding properties of negative active material particles with one another and with a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidenefluoride, polyethylene, polypropylene, styrene-butadiene rubber, acrylated styrene-butadiene rubber, an epoxy resin, nylon, and the like but are not limited thereto.

The conductive material improves electrical conductivity of a negative electrode. Any electrically conductive material can be used as a conductive agent, unless it causes a chemical change. Examples of the conductive material include at least one selected from a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative, and the like; or a mixture thereof.

The current collector includes a copper foil, a nickel foil, a stainless steel foil, a titanium foil, a nickel foam, a copper foam, a polymer substrate coated with a conductive metal, or combinations thereof.

The positive electrode may include a current collector and a positive active material layer formed on the current collector. The positive active material layer may include ionomer represented by a random copolymer of Chemical Formula 1, which is aforementioned in detail.

The positive active material includes a lithiated intercalation compound that reversibly intercalates and deintercalates lithium ions. The positive active material may include a composite oxide including at least one selected from the group consisting of cobalt, manganese, and nickel, as well as lithium. LiₐA_{1-b} R_{b}D₂ (wherein, in the above Chemical Formula, 0.90 ≤ a ≤ 1.8 and 0 ≤ b ≤ 0.5); LiₐE_{1-b}R_{b}O_{2-c}D_{c} (wherein, in the above Chemical Formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above Chemical Formula, 0 ≤ b < 1, 0 ≤ c ≤ 0.05); LiₐNi_{1-b-c}Co_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < a < 2); LiₐNi_{1-b-c}Co_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c} Mn_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above Chemical Formula, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤ 0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(P0₄)₃ (0 ≤ f ≤ 2); Li_{(3-f)} Fe₂(PO₄)₃(0 ≤ f ≤ 2); and LiFePO_{4.}

In the above Chemical Formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is, Cr, V, Fe, Sc, Y, or a combination thereof; and J is V, Cr, Mn, Co, Ni, Cu, or a combination thereof.

Preferably, the positive active material may be lithium manganese-based oxide compounds. Preferably, the positive active material may be For example, the positive active material may be LiNi_{1/3}Co_{1/2}Mn_{1/3}O₂, LiNi_{1/2}Mn_{1/2}O₂, LiNiₓMn₂₋ₓO₄(0<x<1), LiMn₂O₄, LiMnO₂ and so on or a combination thereof.

The positive active material may be a compound with the coating layer on the surface or a mixture of the active material and a compound with the coating layer thereon. The coating layer may include at least one coating element compound selected from the group consisting of an oxide and a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be selected from the group consisting of Mg, Al, Co, K, Na, Ca, Si, Ti, V, Sn, Ge, Ga, B, As, Zr, or a mixture thereof. The coating process may include any conventional processes unless it causes any side effects on the properties of the positive active material (e.g., spray coating, immersing), which is well known to those who have ordinary skill in this art and will not be illustrated in detail.

The positive active material layer preferably further includes a binder and a conductive material.

The binder improves binding properties of the positive active material particles to one another and to a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidenefluoride, polyethylene, polypropylene, styrene-butadiene rubber, acrylated styrene-butadiene rubber, an epoxy resin, nylon, and the like but are not limited thereto.

The conductive material improves electrical conductivity of a negative electrode. Any electrically conductive material can be used as a conductive agent unless it causes a chemical change. Examples of the conductive material include at least one selected from natural graphite, artificial graphite, carbon black, acetylene black, ketjen black, a carbon fiber, a metal powder or a metal fiber including copper, nickel, aluminum, silver, a polyphenylene derivative and the like.

The current collector may be aluminum, a copper foil, a nickel foil, a stainless steel foil, a titanium foil, a nickel foam, a copper foam, a polymer substrate coated with a conductive metal, or combinations thereof.

The negative and positive electrodes may be fabricated in a method of preparing an active material composition by mixing the active material, a conductive material, and a binder and coating the composition on a current collector. If the active material composition comprises the ionomer mentioned above, it may be mixed in with the other components. The electrode manufacturing method is well known and thus, is not described in detail in the present specification. The solvent includes N-methylpyrrolidone and the like but is not limited thereto.

The electrolyte may include a non-aqueous organic solvent and a lithium salt.

The non-aqueous organic solvent plays a role of transporting ions taking part in the electrochemical reaction of a battery.

The non-aqueous organic solvent may include a carbonate-based, ester-based, ether-based, ketone-based, alcohol-based, or aprotic solvent or combinations thereof but is not limited thereto. The carbonate-based solvent may include dimethylcarbonate (DMC), diethylcarbonate (DEC), dipropylcarbonate (DPC), methylpropylcarbonate (MPC), ethylpropylcarbonate (EPC), ethylmethylcarbonate (EMC), ethylenecarbonate (EC), propylenecarbonate (PC), butylenecarbonate (BC), and the like. The ester-based solvent may include methylacetate, ethylacetate, n-propylacetate, dimethylacetate, methylpropinonate, ethylpropinonate, γ -butyrolactone, decanolide, valerolactone, mevalonolactone, caprolactone, and the like. The ether-based solvent may include dimethyl ether, dibutyl ether, tetraglyme, diglyme, dimethoxyethane, 2-methyltetrahydrofuran, tetrahydrofuran (THF), and the like. The ketone-based solvent may include cyclohexanone, and the like. The alcohol-based solvent may include ethanol, isopropylalcohol, and the like. The aprotic solvent include nitriles such as R-CN (wherein R is a C2 to C20 linear, branched, or cyclic hydrocarbon, and may include one or more double bonds, one or more aromatic rings, or one or more ether bonds), amides such as dimethylformamide, dimethylacetamide, dioxolanes such as 1,3-dioxolane, sulfolanes, and the like.

The non-aqueous organic solvent may be used singularly or in a mixture. When the organic solvent is used in a mixture, its mixture ratio can be controlled in accordance with desirable performance of a battery.

The carbonate-based solvent may include a mixture of a cyclic carbonate and a linear carbonate. The cyclic carbonate and the chain carbonate are mixed together in a volume ratio of about 1 : 1 to about 1 : 9.

In addition, the electrolyte of the present invention may be prepared by further adding the aromatic hydrocarbon-based solvent to the carbonate-based solvent. The carbonate-based solvent and the aromatic hydrocarbon-based solvent are mixed together in a volume ratio of about 1 : 1 to about 30 : 1.

The aromatic hydrocarbon-based organic solvent may be represented by the following Chemical Formula 1.

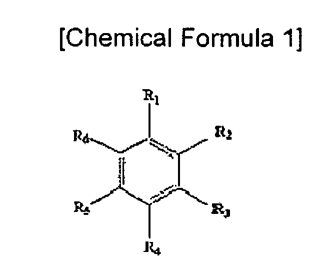

In Chemical Formula 1, R₁ to R₆ are each independently hydrogen, halogen, a C1 to C10 alkyl group, a C1 to C10 haloalkyl group, or a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-diffuorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate or an ethylene carbonate-based compound represented by the following Chemical Formula 2 in order to improve cycle-life of a battery.

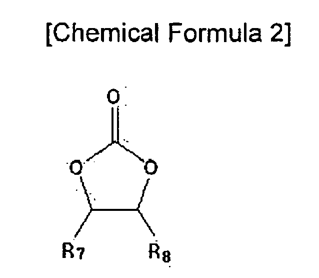

In Chemical Formula 2, R₇ and R₈ are each independently hydrogen, a halogen, a cyano (CN), a nitro (NO₂), and a C1 to C5 fluoroalkyl, provided that at least either of R₇ and R₈ is a halogen, a cyano (CN), a nitro (NO₂), and a C1 to C5 fluoroalkyl.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and combinations thereof. The use amount of the vinylene carbonate or the ethylene carbonate-based compound for improving cycle life may be adjusted within an appropriate range.

The lithium salt is dissolved in the non-aqueous solvent and supplies lithium ions in a rechargeable lithium battery, and basically operates the rechargeable lithium battery and improves lithium ion transfer between positive and negative electrodes. The lithium salt include at least one supporting salt selected from LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (wherein, x and y are integers), LiCl, Lil, LiB(C₂O₄)₂ (lithium bis(oxalato) borate, LiBOB), and a combination thereof. The lithium salt may be used in a concentration of about 0.1 to about 2.0M. When the lithium salt is included within the above concentration range, it may improve electrolyte performance and lithium ion mobility due to optimal electrolyte conductivity and viscosity.

The rechargeable lithium battery may further include a separator between the negative electrode and the positive electrode, if needed. Examples of the separator may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The following examples illustrate the present invention in more detail. These examples, however, should not in any sense be interpreted as limiting the scope of the present invention.

### [Example]

### Example 1

A graphite active material, an aramid-based binder, and Nafion®117 (DuPont Co.) were mixed in a weight ratio of 94:5.5:0.5 in water to prepare negative active material slurry. The negative active material slurry was coated on a copper current collector and then, dried, compressed, and the like, fabricating a negative electrode.

### Comparative Example 1

A negative electrode was fabricated according to the same method as Example except for using no Nafion® in the negative active material slurry.

### Example 2

The negative electrode according to Example 1 was used to fabricate a 18650 circular battery cell. As for a positive electrode, LiMn₂O₄ was used. A separator was interposed between the negative and positive electrodes as shown in FIG. 1. Then, the electrodes and the separator were spiral-wound and then inserted in a battery case. Then, an electrolyte solution was implanted in the case. The case was sealed, fabricating a battery cell. The electrolyte solution was prepared by mixing EC (ethylenecarbonate)/DMC (dimethylcarbonate)/EMC (ethylmethylcarbonate) in a volume ratio of 3/4/3, and 5vol% of a FEC (fluoroethylenecarbonate) additive was added thereto.

### Example 3

A 18650 circular battery cell was fabricated according to the same method as Example 2 except for using Nafion®117 (DuPont Co.) in the positive active material slurry instead of the negative active material slurry. LiMn₂O₄, a binder, a conductive material and Nafion®117 (DuPont Co.) were mixed in a weight ratio of 96:1.5:2:0.5 to prepare the positive active material slurry.

### Example 4

The negative active material slurry was prepared in the same method as Example 2 except for no Nafion® was in the negative active material slurry. The negative active material slurry was coated on a current collector of negative electrode to form a negative active material layer in the thickness of 100 µm, and then Nafion®117 (DuPont Co.) solution was spray coated on the negative active material layer in the thickness of 300nm. The Nafion®117 (DuPont Co.) solution was prepared to have 15wt% Nafion concentration using 1-propanol and water as a mixed solvent. Then the same method as in Example 2 was applied to fabricate a 18650 circular battery cell.

### Example 5

The positive active material slurry was prepared in the same method as Example 3 except for no Nafion® in the positive active material slurry. The positive active material slurry was coated on a current collector of positive electrode to form a positive active material layer in the thickness of 100 µm, and then Nafion®117 (DuPont Co.) solution was spray coated on the positive active material layer in the thickness of 300nm. The Nafion®117 (DuPont Co.) solution was prepared to have 15wt% Nafion concentration using 1-propanol and water as a mixed solvent. Then the same method as in Example 3 was applied to fabricate a 18650 circular battery cell.

### Comparative Example 2

A 18650 circular battery cell was fabricated according to the same method as Example 1 except for using the negative electrode of Comparative Example 1.

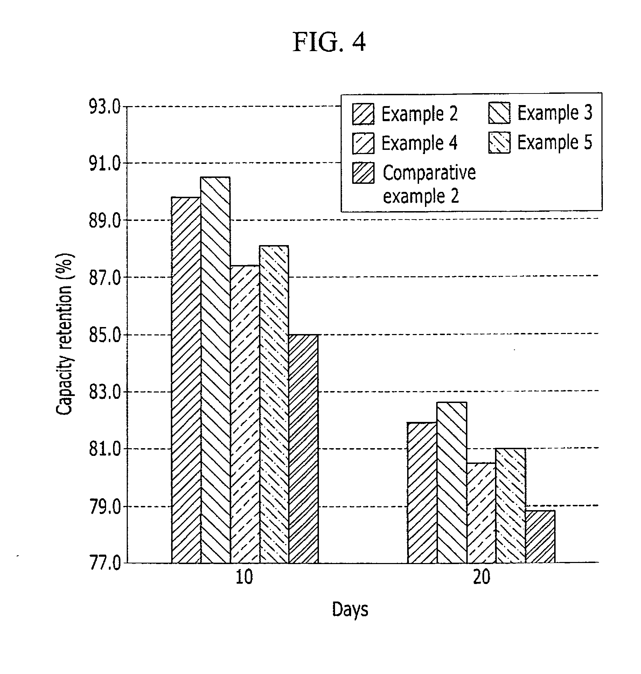

The rechargeable lithium battery cells according to Examples 2 to 5 and Comparative Example 2 were allowed to stand at a high temperature and evaluated regarding cycle-life characteristic. The result is provided in FIG. 4.

The cycle-life evaluation by allowing a battery to stand at a high temperature is a method of acceleration-evaluating its cycle-life to shorten evaluation time or to find out its degradation tendency at a high temperature. The evaluation is performed by allowing a fabricated battery cell to stand in a 60° C charging and discharging device and measuring its capacity deterioration rate against the initial capacity by every predetermined period (10 days). The time period may be determined by degradation tendency of a battery.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. An electrode for a rechargeable lithium battery, comprising at least one ionomer represented by a random copolymer of Chemical Formula 1 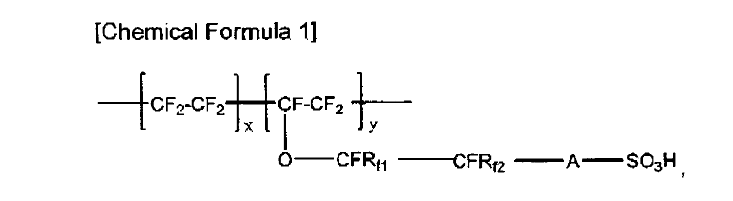 wherein A is selected from a bond, a CFR_{f7}- group, a -O-CFR_{f8}- group, a -O-(GFR_{f3}-GFR_{f4})- group, - a (CFR_{f5}-CFR_{f6})- group or a combination comprising at least one of the above groups, wherein two or more groups in total are present in the combination,
R_{f1} to R_{f8} are each independently fluorine, a C₁₋₄ alkyl, preferably CH₃, or
a fluorinated C₁₋₄ alkyl, preferably CF₃ and
x and y are each independently an integer ranging from 1 to 100,
wherein the electrode further comprises an active material layer, and the ionomer is contained within the active material layer and/or coated directly on a surface of the active material layer, preferably the ionomer comprises from 500 to 1500, more preferably from 750 to 1250 and more preferably 1000 structural units represented by Chemical Formula 1, wherein the ionomer is included in an amount of 0.1 to 1 parts by weight based on 100 parts by weight of the active material.

2. An electrode according to claim 1, wherein the ionomer is included in an amount of 0.5 to 1 parts by weight based on 100 parts by weight of the active material.

3. An electrode according to claim 1 or claim 2, wherein A comprises a -O-(CFR_{f3}-CFR_{f4})- group, preferably wherein A comprises between 1 and 10 -O-(CFR_{f3}-CFR_{f4})- groups.

4. An electrode according to any of claims 1 to 3, wherein A comprises at least one -O-(CF₂-CF₂)- group and at least one -O-(CF₂-CFCF₃)- group.

5. An electrode according to any of claims 1 to 4, wherein, independently, x is an integer ranging from 1 to 50, preferably 3 to 20, and y is an integer ranging from 1 to 50, preferably 1 to 10.

6. An electrode according to any of claims 1 to 5, where the ionomer is represented by [Chemical Formula 2]: 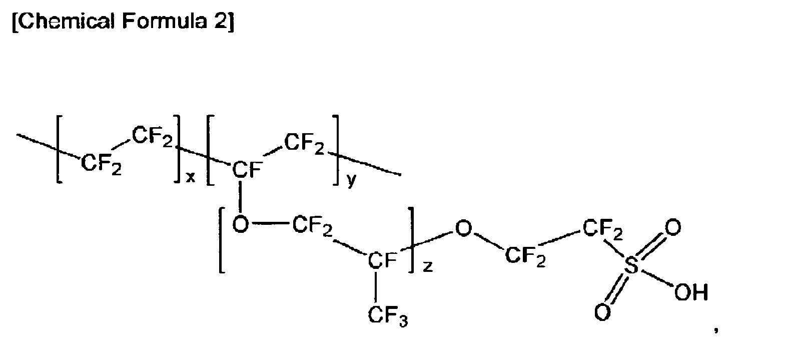 wherein x is an integer ranging from 3 to 20, y is an integer ranging from 1 to 10,
z is an integer ranging from 1 to 10.

7. An electrode according to claim 6, wherein x is an integer ranging from 6 to 15, y is an integer ranging from 1 to 5 and z is an integer ranging from 1 to 5, preferably x is an integer ranging from 10 to 15, y is 1 to 5 and z is 1.

8. An electrode according to any of claims 1 to 7, where the electrode is a positive electrode or a negative electrode.

9. An electrode according to claim 8, where the electrode is a positive electrode and the active material layer comprises a positive active material selected from the group consisting of LiₐA_{1-b}R_{b}D₂ (wherein, in the above Chemical Formula, 0.90 ≤ a ≤ 1.8 and 0 ≤ b ≤ 0.5); LiₐE_{1-b}R_{b}O_{2-c}D_{c} (wherein, in the above Chemical Formula, 0.90 ≤ a ≤ 1.8, 0 ≤ b ≤ 0.5 and 0 ≤ c ≤ 0.05); LiE_{2-b}R_{b}O_{4-c}D_{c} (wherein, in the above Chemical Formula, 0 ≤ b ≤ 1, 0 ≤ c ≤ 0.05); LiₐNi_{1-b-c}Co_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < a < 2); LiₐNi_{1-bc}Co_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNh₋ₜH:Mn_{b}R_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-c}Z_{α} (wherein, in the above Chemical Formula, 0.90 ≤ a ≤ 1.8, 0 ≤ b ≤ 0.5, 0 ≤ c ≤ 0.05 and 0 < α < 2);
LiₐNi_{1-b-c}Mn_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above Chemical Formula, 0.90 ≤ a ≤ 1.8, 0 ≤ b ≤ 0.9, 0 ≤ c ≤ 0.5, 0 ≤ d ≤ 0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤ 0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); LiFePO₄ or a combination thereof,
A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof, preferably the active material is a lithium manganese-based oxide.

10. An electrode according to any of claims 1 to 9 wherein the ionomer is contained within the active material layer and coated directly on a surface of the active material layer, preferably wherein the ionomer within the active material layer is present at a greater concentration toward the interface of the coating layer of ionomer and the active material layer.

11. An electrode according to any of claims 1 to 10 further comprising a current collector.

12. An electrode according to any of claims 1 to 11, wherein the active material layer further comprises a conductive material.

13. An electrode according to any of claims 1 to 12, wherein the active material layer further comprises at least one binder.

14. An electrode according to any of claims 1 to 13, wherein the ionomer is coated directly on a surface of the active material layer at a thickness of from about 0.05% to about 10% of the active material layer, preferably about 0.1 % to about 10%, more preferably about 0.2% to about 5%.

15. A rechargeable lithium battery comprising an electrode according to any of claims 1 to 14 and a non-aqueous electrolyte.

## Patentansprüche

1. Elektrode für eine wiederaufladbare Lithiumbatterie, umfassend mindestens ein lonomer dargestellt durch ein Random-Copolymer der Chemischen Formel 1 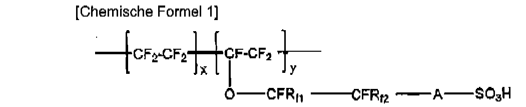 wobei A ausgewählt ist aus einer Bindung, einer CFR_{f7} -Gruppe, einer -O-CFR_{f8}-Gruppe, einer -O(CFR_{f3}-CFR_{f4})-Gruppe, einer -(CFR_{f5}-CFR_{f6})-Gruppe oder einer Kombination, die mindestens eine der genannten Gruppen umfasst, wobei insgesamt zwei oder mehr Gruppen in der Kombination enthalten sind,
R_{f1} bis R_{f6} unabhängig voneinander jeweils Fluor, ein C₁₋₄-Alkyl, bevorzugt CH₃, oder ein fluoriertes C₁₋₄-Alkyl, bevorzugt CF₃ sind und
x und y unabhängig voneinander jeweils eine ganze Zahl im Bereich von 1 bis 100 sind, wobei die Elektrode weiterhin eine Aktivmaterialschicht umfasst und das lonomer in der Aktivmaterialschicht enthalten ist und/oder direkt auf der Oberfläche der Aktivmaterialschicht beschichtet Ist, bevorzugter Weise umfasst das lonomer 500 bis 1500, bevorzugter 750 bis 1250 und weiter bevorzugt 1000 durch die Chemische Formel 1 dargestellte Struktureinheiten, wobei das lonomer in einer Menge von 0,1 bis 1 Gewichtsteilen bezogen auf 100 Gewichtsteile des aktiven Materials enthalten ist.

2. Elektrode nach Anspruch 1, wobei das lonomer in einer Menge von 0,5 bis 1 Gewichtsteilen bezogen auf 100 Gewichtsteile des aktiven Materials enthalten ist.

3. Elektrode nach Anspruch 1 oder Anspruch 2, wobei A eine -O-(CFR_{f3}-CFR_{f4})-Gruppe umfasst, bevorzugt umfasst A zwischen 1 und 10 -O-(CFR_{f3}-CFR_{f4})-Gruppen.

4. Elektrode nach einem der Ansprüche 1 bis 3, wobei A mindestens eine -O-(CF₂-CF₂)-Gruppe und mindestens eine -O-(CF₂-CFCF₃)-Gruppe umfasst.

5. Elektrode nach einem der Ansprüche 1 bis 4, wobei, unabhängig voneinander, x eine ganze Zahl im Bereich von 1 bis 50, bevorzugt von 3 bis 20 ist und y eine ganze Zahl im Bereich von 1 bis 50, bevorzugt im Bereich 1 bis 10 ist.

6. Elektrode nach einem der Ansprüche 1 bis 5, wobei das lonomer dargestellt ist durch [Chemische Formel 2]: 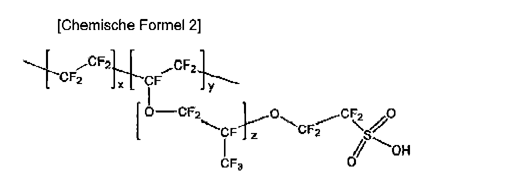 wobei x eine ganze Zahl im Bereich von 3 bis 20 ist,
y eine ganze Zahl im Bereich von 1 bis 10 ist und
z eine ganze Zahl im Bereich von 1 bis 10 ist.

7. Elektrode nach Anspruch 6, wobei x eine ganze Zahl im Bereich von 6 bis 15 ist, y eine ganze Zahl im Bereich von 1 bis 5 ist und z eine ganze Zahl im Bereich von 1 bis 5 ist, wobei bevorzugt x eine ganze Zahl im Bereich von 10 bis 15 ist, y von 1 bis 5 ist und z 1 ist.

8. Elektrode nach einem der Ansprüche 1 bis 7, wobei die Elektrode eine positive Elektrode oder eine negative Elektrode ist.

9. Elektrode nach Anspruch 8, wobei die Elektrode eine positive Elektrode ist und die Aktivmaterialschicht ein positives aktives Material ist, ausgewählt aus der Gruppe bestehend aus LiₐA_{1-b}R_{b}D₂ (mit 0,90 ≤ a ≤ 1,8 und 0 ≤ b ≤ 0,5 in obiger Chemischer Formel); LiₐE_{1b}R_{b}O_{2-c}D_{c} (mit 0,90 ≤ a ≤ 1,8 , 0 ≤ b ≤ 0,5 und 0 ≤ c ≤ 0,05 in obiger Chemischer Formel); LiE_{2-b}R_{b}O_{4-c}D_{c} (mit 0 ≤ b ≤ 1 und 0 ≤ c ≤ 0,05 in obiger Chemischer Formel) LiₐNi_{1-b-c}Co_{b}R_{c}D_{α} (mit 0,90 ≤ a ≤ 1,8, 0 ≤ b ≤ 0,5 , 0 ≤ c ≤ 0,05 und α ≤ 2 ); LiₐNi_{1-b-c}Co_{b}R_{c}O_{2-α}Z_{α} (mit 0,90 ≤ a ≤ 1,8, 0 ≤ b ≤ 0,5 , 0 ≤ c ≤ 0,05 und 0 < α < 2); LiₐNi_{1-b-c}Co_{b}R_{c}O_{2-c}Z₂ (mit 0,90 s a s 1,8, 0 ≤ b ≤ 0,5 , 0 ≤ c ≤ 0,05 und 0 < α < 2); LiₐNi_{1-b-c}Mn_{b}R_{c}D_{α} (mit 0,90 ≤ a ≤ 1,8, 0 ≤ b ≤ 0,5 , 0 ≤ c ≤ 0,05 und 0 < α ≤ 2); LiₐNi_{1-b-c}Mn_{b}R_{c}O_{2-c}Z_{α} (mit 0,90 ≤ a ≤ 1,8, 0 ≤ b ≤ 0,5 , 0 ≤ c ≤ 0,05 und 0 < o < 2); LiaNi_{1-b-c}Mn_{b}R_{c}O_{2-α}Z₂ (mit 0,90 ≤ a ≤ 1,8, 0 ≤ b ≤ 0,5 , 0 ≤ c ≤ 0,05 und 0 < α < 2); LiₐNi_{b}E_{c}G_{d}O₂ (mit 0,90 ≤ a ≤ 1,8, 0 ≤ b ≤ 0,9 , 0 ≤ c ≤ 0,5 und 0,001 S d ≤ 0,1); LiₐNi_{b}Co_{c}Mn_{d}GeO₂ (mit 0,90 ≤ a ≤ 1,8, 0 ≤ b ≤ 0,9 , 0 ≤ c ≤ 0,5, 0 ≤ d ≤ 0,5 und 0,001 ≤ e ≤ 0,1); LiₐNiG_{b}O₂ (mit 0,90 ≤ a ≤ 1,8 und 0,001 ≤ b ≤ 0,1); LiₐCoG_{b}O₂ (mit 0,90 ≤ a ≤ 1,8 und 0,001 ≤ b ≤ 0,1); LiₐMnG_{b}O₂ (mit 0,90 ≤ a ≤ 1,8 und 0,001 ≤ b ≤ 0,1); LiₑMn₂GₑO₄ (mit 0,90 ≤ a ≤ 1,8, 0,001 ≤ b ≤ 0,1); QO₂; QS₂, LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); LiFePO₄ oder eine Kombination daraus,
wobei gilt: A ist Ni, Co, Mn oder eine Kombination aus diesen, R ist Al, Ni, Co, Mn, Cr, Fe, Mg, Sr, V, ein Seltenerdmetall oder eine Kombination aus diesen, D ist O, F, S, P oder eine Kombination aus diesen, E ist Co, Mn, oder eine Kombination aus diesen, Z ist F, S, P oder eine Kombination aus diesen, G ist Al, Cr, Mn, Fe, Mg, La, Ce, Sr, V oder eine Kombination aus diesen, Q ist Ti, Mo, Mn oder eine Kombination aus diesen, T ist Cr, V, Fe, Sc, Y oder eine Kombination aus diesen und J ist V, Cr, Mn, Ni, Cu oder eine Kombination aus diesen ist, wobei das aktive Material bevorzugt ein Lithium-Mangan-basiertes Oxid ist.

10. Elektrode nach einem der Ansprüche 1 bis 9, wobei das lonomer in der Aktivmaterialschicht enthalten ist und direkt auf eine Oberfläche der Aktivmaterialschicht beschichtet ist, wobei bevorzugt das lonomer in der Aktivmaterialschicht in Richtung der Grenzfläche zwischen der Beschichtungsschicht des lonomers und der Aktivmaterialschicht in einer größeren Konzentration vorliegt.

11. Elektrode nach einem der Ansprüche 1 bis 10, weiterhin einen Stromkollektor umfassend.

12. Elektrode nach einem der Ansprüche 1 bis 11, wobei die Aktivmaterialschicht ferner ein leitfähiges Material umfasst.

13. Elektrode nach einem der Ansprüche 1 bis 12, wobei die Aktivmaterialschicht ferner mindestens ein Bindemittel umfasst.

14. Elektrode nach einem der Ansprüche 1 bis 13, wobei das lonomer direkt auf eine Oberfläche der Aktivmaterialschicht beschichtet ist mit einer Schichtdicke von ungefähr 0,05% bis ungefähr 10% der Aktivmaterialschicht, bevorzugt ungefähr 0,1% bis ungefähr 10%, bevorzugter ungefähr 0,2% bis ungefähr 5%.

15. Eine wiederaufladbare Lithiumbatterie umfassend eine Elektrode nach einem der Ansprüche 1 bis 14 und einen nicht-wässrigen Elektrolyten.

## Revendications

1. Électrode pour une batterie rechargeable au lithium, comprenant au moins un ionomère représenté par un copolymère statistique de formule chimique 1 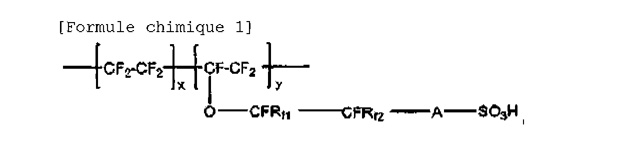 dans laquelle A est choisi parmi une liaison, un groupe CFR_{f7}-, un groupe -O-CFR_{f6}-, un groupe -O-(CFR_{f3}-CFR_{f4})-, un groupe (CFR_{f5}-CFR_{f6})- ou une combinaison comprenant au moins un des groupes ci-dessus, deux groupes ou plus au total étant présents dans la combinaison,
R_{f1} à R_{f8} sont chacun indépendamment fluor, un alkyle en C₁₋₄, de préférence CH₃, ou un alkyle en C₁₋₄ fluoré, de préférence CF₃ et
x et y sont chacun indépendamment un entier dans la plage de l à 100, l'électrode comprenant en outre une couche de matériau actif, et l'ionomère étant contenu dans la couche de matériau actif et/ou revêtu directement sur une surface de la couche de matériau actif, de préférence l'ionomère comprend de 500 à 1500, plus préférablement de 750 à 1250 et plus préférablement 1000 motifs structuraux représentés par la formule chimique 1, l'ionomère étant inclus en une quantité de 0,1 à 1 partie en poids sur la base de 100 parties en poids du matériau actif.

2. Électrode selon la revendication 1, dans laquelle l'ionomère est inclus en une quantité de 0,5 à 1 partie en poids sur la base de 100 parties en poids du matériau actif.

3. Électrode selon la revendication 1 ou la revendication 2, dans laquelle A comprend un groupe -O-(CFR_{f3}-CFR_{f4})-, de préférence dans laquelle A comprend entre 1 et 10 groupes -O-(CFR_{f3}-CFR_{f4})-.

4. Électrode selon l'une quelconque des revendications 1 à 3, dans laquelle A comprend au moins un groupe -O-(CF₂-CF₂)- et au moins un groupe -O-(CF₂-CFCF₃)-.

5. Électrode selon l'une quelconque des revendications 1 à 4, dans laquelle, indépendamment, x est un entier dans la plage de 1 à 50, de préférence de 3 à 20, et y est un entier dans la plage de 1 à 50, de préférence de 1 à 10

6. Électrode selon l'une quelconque des revendications 1 à 5, dans laquelle l'ionomère est représenté àr [formule chimique 2] : 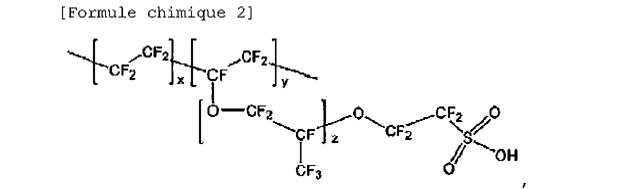 dans laquelle x est un entier dans la plage de 3 à 20, y est un entier dans la plage de 1 à 10,
z est un entier dans la plage de 1 à 10

7. Électrode selon la revendication 6, dans laquelle x est un entier dans la plage de 6 à 15, y est un entier dans la plage de 1 à 5 et z est un entier dans la plage de 1 à 5, de préférence x est un entier dans la plage de 10 à 15, y est 1 à 5 et z est 1

8. Électrode selon l'une quelconque des revendications 1 à 7, dans laquelle l'électrode est une électrode positive ou une électrode négative

9. Électrode selon la revendication 8, l'électrode étant une électrode positive et la couche de matériau actif comprenant un matériau actif positif choisi dans le groupe constitué de Li₂A_{1-b}R_{b}D₂ (où, dans la formule chimique ci-dessus, 0,90 ≤ a ≤ 1,8 et 0 ≤ b ≤ 0,5) ; LiₐE_{1-b}R_{b}O_{2-c}D_{c} (où, dans la formule chimique ci-dessus, 0,90 ≤ a ≤ 1,8, 0 ≤ b ≤ 0,5 et 0 ≤ c ≤ 0,05) ; LiE_{2-b}R_{b}O_{4-c}D_{c} (où, dans la formule chimique ci-dessus, 0 ≤ b < 1,0 ≤ c ≤ 0,05) ; LiₐNi_{1-b-c}Co_{b}R_{c}D_{α} (où, dans la formule chimique ci-dessus, 0,90 ≤ a ≤ 1,8, 0 ≤ b ≤ 0,5, 0 ≤ c ≤ 0,05 et 0 < α ≤ 2) ; LiₐNi_{1-b-c}Co_{b}R_{c}O_{2-α}Z_{α} (où, dans la formule chimique ci-dessus, 0,90 ≤ a ≤ 1,8, 0 ≤ b ≤ 0,5, 0 ≤ c ≤ 0,05 et 0 ≤ α < 2) ; LiₐNi_{1-b-c}Co_{b}R_{c}O_{2-α}Z₂ (où, dans la formule chimique ci-dessus, 0,90 ≤ a ≤ 1,8, 0 ≤ b ≤ 0,5, 0 ≤ c ≤ 0,05 et 0 < α < 2) ; LiₐNi_{1-b-c}Mn_{b}R_{c}D_{α} (où, dans la formule chimique ci-dessus, 0,90 ≤ a ≤ 1,8, 0 ≤ b ≤ 0,5, 0 ≤ c ≤ 0,05 et 0 < α ≤ 2) ; LiₐNi_{l-b-c}Mn_{b}R_{c}O_{2-c}Z_{α} (où, dans la formule chimique ci-dessus, 0,90 ≤ a ≤ 1,8, 0 ≤ b ≤ 0,5, 0 ≤ c ≤ 0,05 et 0 < α < 2) : LiₐNi_{l-b-c}Mn_{b}R_{c}O_{2-α}Z₂ (où, dans la formule chimique ci-dessus, 0,90 ≤ a ≤ 1,8, 0 ≤ b ≤ 0,5, 0 ≤ c ≤ 0,05 et 0 < α < 2) ; LiₐNi_{b}E_{c}G_{d}O₂ (où, dans la formule chimique ci-dessus, 0,90 ≤ a ≤ 1,8, 0 ≤ b ≤ 0,9, 0 ≤ c ≤ 0,5 et 0,001 ≤ d ≤ 0,1) ; LiₐNi_{b}Co_{c}Mn_{d}GeO₂ (où, dans la formule chimique ci-dessus, 0,90 ≤ a ≤ 1,8, 0 ≤ b ≤ 0,9, 0 ≤ c ≤ 0,5, 0 ≤ d ≤ 0,5 et 0,001 ≤ e ≤ 0,1) ; LiₐNiG_{b}O₂ (où, dans la formule chimique ci-dessus, 0,90 ≤ a ≤ 1,8 et 0,001 ≤ b ≤ 0,1) ; LiₐCoG_{b}O₂ (où, dans la formule chimique ci-dessus, 0,90 ≤ a ≤ 1,8 et 0,001 ≤ b ≤ 0,1) ; LiₐMnG_{b}O₂ (où, dans la formule chimique ci-dessus, 0,90 ≤ a ≤ 1,8 et 0,001 ≤ b ≤ 0,1) ; LiₐMn₂G_{b}O₄ (où, dans la formule chimique ci-dessus, 0,90 ≤ a ≤ 1,8 et 0,001 ≤ b ≤ 0,1) ; QO₂ ; QS₂ ; LiQS₂ ; V₂O₅ ; LiₗV₂O₅ ; LiTO₂ ; LiNiVO₄ ; Li_{(3-f)}J₂(PO₄)₃ (0 ≤ f ≤ 2) ; Li_{(3-f)}Fe₂(PO₄)₃ (0 ≤ f ≤ 2) ; LiFePO₄ ou une combinaison de ceux-ci,
A est Ni, Co, Mn, ou une combinaison de ceux-ci ; R est Al, Ni, Co, Mn, Cr, Fe, Mg, Sr, V, un élément terre rare, ou une combinaison de ceux-ci ; D est O, F, S, P, ou une combinaison de ceux-ci ; E est Co, Mn, ou une combinaison de ceux-ci, Z est F, S, P, ou une combinaison de ceux-ci ; G est Al, Cr, Mn, Fe, Mg, La, Ce, Sr, V, ou une combinaison de ceux-ci ; Q est Ti, Mo, Mn, ou une combinaison de ceux-ci ; T est Cr, V, Fe, Sc, Y, ou une combinaison de ceux-ci ; et J est V, Cr, Mn, Co, Ni, Cu, ou une combinaison de ceux-ci, de préférence le matériau actif est un oxyde à base de lithium-manganèse.

10. Électrode selon l'une quelconque des revendications 1 a 9 dans laquelle l'ionomère est contenu dans la couche de matériau actif et revêtu directement sur une surface de la couche de matériau actif, de préférence dans laquelle l'ionomère dans la couche de matériau actif est présent à une concentration plus élevée vers l'interface de la couche de revêtement d'ionomère et de la couche de matériau actif.

11. Électrode selon l'une quelconque des revendications 1 à 10 comprenant en outre un collecteur de courant.

12. Électrode selon l'une quelconque des revendications 1 à 11, dans laquelle la couche de matériau actif comprend en outre un matériau conducteur.

13. Électrode selon l'une quelconque des revendications 1 à 12, dans laquelle la couche de matériau actif comprend en outre au moins un liant.

14. Électrode selon l'une quelconque des revendications 1 à 13, dans laquelle l'ionomère est revêtu directement sur une surface de la couche de matériau actif à une épaisseur d'environ 0,05 % à environ 10 % de la couche de matériau actif, de préférence d'environ 0,1 % à environ 10 %, plus préférablement d'environ 0,2 % à environ 5 %.

15. Batterie rechargeable au lithium comprenant une électrode selon l'une quelconque des revendications 1 à 14 et un électrolyte non aqueux.
